(19) Europäisches Patentamt / European Patent Office / Office européen des brevets

(11) **EP 1 645 741 B1**

(12) **EUROPÄISCHE PATENTSCHRIFT**

(45) Veröffentlichungstag und Bekanntmachung des Hinweises auf die Patenterteilung:
**13.02.2008  Patentblatt 2008/07**

(51) Int Cl.:
*F02D 19/08* (2006.01)     *F02D 41/00* (2006.01)
*F02D 19/02* (2006.01)

(21) Anmeldenummer: **05028581.6**

(22) Anmeldetag: **18.05.2005**

(54) **Verfahren zum Regeln einer Brennkraftmaschine**

Method of controlling an internal combustion engine

Procédé de régulation d'un moteur à combustion interne

(84) Benannte Vertragsstaaten:
**AT BE BG CH CY CZ DE DK EE ES FI FR GB GR HU IE IS IT LI LT LU MC NL PL PT RO SE SI SK TR**

(30) Priorität: **21.05.2004  AT 8882004**

(43) Veröffentlichungstag der Anmeldung:
**12.04.2006  Patentblatt 2006/15**

(62) Dokumentnummer(n) der früheren Anmeldung(en) nach Art. 76 EPÜ:
**05010691.3 / 1 602 813**

(73) Patentinhaber: **GE Jenbacher GmbH & Co. OHG**
**6200 Jenbach (AT)**

(72) Erfinder:
• **Robitschko, Reinhard**
 **6200 Jenbach (AT)**

• **Schaumberger, Herbert**
 **6130 Schwaz (AT)**
• **Hirzinger, Johann**
 **6345 Kössen (AT)**
• **Fahringer, Albert**
 **6345 Kössen (AT)**

(74) Vertreter: **Torggler, Paul Norbert et al**
**Wilhelm-Greil-Strasse 16**
**6020 Innsbruck (AT)**

(56) Entgegenhaltungen:
**WO-A-03/076788**     **US-A- 5 666 923**
**US-A1- 2002 020 388**     **US-A1- 2002 185 086**
**US-B1- 6 202 601**

**Beschreibung**

Die vorliegende Erfindung betrifft ein Verfahren zum Regeln einer Brennkraftmaschine, insbesondere mit magerer Betriebsweise, zum Erreichen vorgebbarer Stickoxydemissionswerte der Brennkraftmaschine, wobei der Brennkraftmaschine zumindest zeitweise ein erster Brennstoff und zumindest zeitweise ein zweiter Brennstoff zugeführt wird, wobei die pro Zeiteinheit der Brennkraftmaschine zugeführte Menge des ersten Brennstoffes in Abhängigkeit von einer Steuersollwertvorgabe gesteuert oder konstant gehalten wird und die pro Zeiteinheit der Brennkraftmaschine zugeführte Menge des zweiten Brennstoffes zum Erreichen des vorgebbaren Stickoxydemissionswertes in Abhängigkeit von mindestens einem erfassten Motorparameter geregelt wird sowie eine entsprechende Regeleinrichtung und Brennkraftmaschine.

Aus der EP 0 259 382 B1 ist es bereits bekannt, eine Brennkraftmaschine zum Antrieb eines elektrischen Generators mit konstanten Stickoxidemissionswerten zu betreiben, indem man den Gemischdruck vor den Einlassventilen der Zylinder in Abhängigkeit der vom Generator abgegebenen elektrischen Leistung regelt. Hierbei wird der Sollwert des Gemischdrucks im Einlasstrakt vor den Einlassventilen aus einem Kennlinienfeld, das die Abhängigkeit des Gemischdrucks von der abgegebenen elektrischen Leistung bei konstanten Emissionswerten zeigt, entnommen. Über eine Verstellung des Brennstoff-Luft-Verhältnisses in einem Gasmischer wird dann der gemessene Ist-Wert des Druckes vor den Einlassventilen auf seinen über das Kennlinienfeld bestimmten Soll-Wert geregelt. Die hierfür verwendete Kennlinie wird durch Einmessen von zumindest zwei Betriebspunkten mit gleichen $NO_x$-Emissionswerten erzeugt. Durch dieses bisher bekannte Verfahren ist es möglich, dass eine Brennkraftmaschine die gewünschten Emissionswerte in einem weiten Leistungsbereich sehr genau einhalten kann. Das aus dem genannten europäischen Patent bekannte System hat den Vorteil, dass es praktisch ohne Verschleiß und Alterung von empfindlichen Sensoren auskommt.

In der europäischen Patentanmeldung EP 1 225 330 A2 wird ein weiter verbessertes, gattungsgemäßes System vorgestellt, bei dem das aus der EP 0 259 382 B1 bekannte Regelschema noch durch eine Zündzeitpunktverstellung ergänzt wurde, um in jedem Betriebszustand eine Regelreserve für das schnelle Reagieren auf Laständerungen bereitzustellen. Darüber hinaus dient diese Regelung dazu, die Brennkraftmaschine immer mit einem optimalen Wirkungsgrad zu fahren.

Die bisherigen Regelverfahren sind jeweils nur auf den Betrieb mit einer Art von Brennstoff ausgelegt. Es gibt jedoch auch - vor allem stationäre - Brennkraftmaschinen, welche mit zwei verschiedenen Brennstoffarten betrieben werden. Für derartige Motoren ist bisher kein Regelverfahren bekannt, bei dem das Erreichen vorgebbarer Stickoxydemissionswerte sichergestellt ist.

Aufgabe der vorliegenden Erfindung ist es daher, ein derartiges Regelverfahren für Brennkraftmaschinen zu schaffen.

Dies wird erfindungsgemäß erreicht, indem die pro Zeiteinheit der Brennkraftmaschine zugeführte Menge des zweiten Brennstoffes geregelt wird, indem ein durch sie beeinflusster Gemischdruck in einem Einlasstrakt der Brennkraftmaschine an einen in Abhängigkeit von der abgegebenen Leistung und des vorgegebenen Stickoxydemissionswertes der Brennkraftmaschine bestimmten Gemischdrucksollwert angepasst wird, oder dass die pro Zeiteinheit der Brennkraftmaschine zugeführte Menge des zweiten Brennstoffes geregelt wird, indem ein durch sie beeinflusster Wert in einem Abgastrakt der Brennkraftmaschine an einen in Abhängigkeit von der abgegebenen Leistung und des vorgegebenen Stickoxydemissionswertes der Brennkraftmaschine bestimmten $\lambda$-Sollwert angepasst wird.

Bei Brennkraftmaschinen, die zumindest zeitweise mit zwei verschiedenen Brennstoffarten betrieben werden, ist somit vorgesehen, den Volumenstrom (= pro Zeiteinheit der Brennkraftmaschine zugeführte Menge) des einen Brennstoffes nach fixen Vorgabewerten zu steuern bzw. konstant zu halten. Während dieser Zeit wird über den Volumenstrom des anderen Brennstoffs die Brennkraftmaschine so geregelt, dass die ausgestoßenen Abgase die vorgegebenen Emissionswerte einhalten.

Für die erfindungsgemäße Regelung gibt es verschiedene Varianten. Eine bevorzugte davon sieht vor, dass die pro Zeiteinheit der Brennkraftmaschine zugeführte Menge des zweiten Brennstoffes geregelt wird, indem ein durch sie beeinflusster Gemischdruck in einem Einlasstrakt der Brennkraftmaschine an einen in Abhängigkeit von der abgegebenen Leistung und des vorgegebenen Stickoxydemissionswertes der Brennkraftmaschine bestimmten Gemischdrucksollwert angepasst wird. Hierfür wird eine Messeinrichtung im Einlasstrakt benötigt, die den aktuellen Gemischdruck vor den Einlassventilen bestimmt. Durch entsprechende Einstellung der pro Zeiteinheit zugeführten Menge des zweiten Brennstoffes wird der Istwert des Gemischdrucks an seinen Sollwert angepasst.

In einer anderen Variante kann aber auch statt des Gemischdrucks ein entsprechender $\lambda$-Wert im Abgas gemessen werden. Bei dieser Variante ist vorgesehen, dass die pro Zeiteinheit der Brennkraftmaschine zugeführte Menge des zweiten Brennstoffes geregelt wird, indem ein durch sie beeinflusster $\lambda$-Wert in einem Abgastrakt der Brennkraftmaschine an einen in Abhängigkeit von der abgegebenen Leistung und des vorgegebenen Stickoxydemissionswertes der Brennkraftmaschine bestimmten $\lambda$-Sollwert angepasst wird.

Der $\lambda$-Wert beschreibt hierbei, wie allgemein bekannt, das Luftverhältnis bei Verbrennungsvorgängen, wobei $\lambda = 1$ eine stöchiometrischen Verbrennung entspricht.

Besonders bevorzugt wird das erfindungsgemäße Verfahren bei insbesondere stationären, Gasmotoren eingesetzt, wobei sowohl der erste Brennstoff ein brennbares Gas und/oder auch der zweite Brennstoff ein zweites brennbares Gas ist. Sowohl der erste als auch der zweite Brennstoff können Gemische zum Beispiel von verschiedenen Gasen sein. Hierbei ist es möglich auch an sich nicht brennbare Bestandteile bzw. Gase dem ersten oder zweiten Brennstoff beizumischen, zum Beispiel um diese zu verbrennen.

Besonders günstig kann das erfindungsgemäße Verfahren eingesetzt werden, wenn eine Änderung des Mischungsverhältnisses der beiden Brennstoffe oder eine Umstellung des Betriebs der Brennkraftmaschine vom Betrieb mit dem ersten Brennstoff auf den Betrieb mit den zweiten Brennstoff vorgesehen ist. In beiden Fällen ermöglicht das erfindungsgemäße Verfahren während der gesamten Umstellung von einem auf den anderen Brennstoff, bzw. während der gesamten Änderung des Mischungsverhältnisses die Brennkraftmaschine mit vorgebbaren Stickoxydemissionswerten zu fahren. Hierzu wird in einem ersten Betriebsmodus diesseits eines vorgebbaren Betriebsumschaltpunktes die pro Zeiteinheit zugeführte Menge des ersten Brennstoffes gesteuert oder konstant gehalten und die pro Zeiteinheit des zugeführte Menge des zweiten Brennstoffes geregelt und in einem zweiten Betriebsmodus jenseits des vorgebbaren Betriebsumschaltpunktes die pro Zeiteinheit zugeführte Menge des zweiten Brennstoffs gesteuert oder konstant gehalten und die pro Zeiteinheit zugeführte Menge des ersten Brennstoffs geregelt. Der Betriebsumschaltpunkt kann hierbei über verschiedene Parameter definiert sein. Günstigerweise definiert ein vorgebbares Verhältnis zwischen der pro Zeiteinheit zugeführten Menge des ersten Brennstoffs und der pro Zeiteinheit zugeführten Menge des zweiten Brennstoffs den Betriebsumschaltpunkt. Weitere Einzelheiten und Merkmale der vorliegenden Erfindung ergeben sich aus der nachfolgenden Figurenbeschreibung. Dabei zeigt:

Fig. 1      den beim Stand der Technik bekannten Zusammenhang zwischen der von der Brennkraftmaschine abgegebenen Leistung P und dem im Einlasstrakt der Brennkraftmaschine gemessenen Gemischdruck $P_2'$,

Fig. 2      ein erfindungsgemäßes Motorschema,

Fig. 3 und 4      Details zu erfindungsgemäßen Möglichkeiten der Ausgestaltung einer Brennstoffmischeinrichtung,

Fig. 5 und 6      Diagramme zu den Abhängigkeiten der Leistung P und des Gemischdrucks $p_2'$ anhand derer das erfindungsgemäße Regelverfahren illustriert wird und

Fig. 7      eine schematische Darstellung zum zeitlichen Verlauf der Volumenströme bei der Umstellung vom Betrieb mit einer Brennstoffart auf den Betrieb mit einer anderen Brennstoffart.

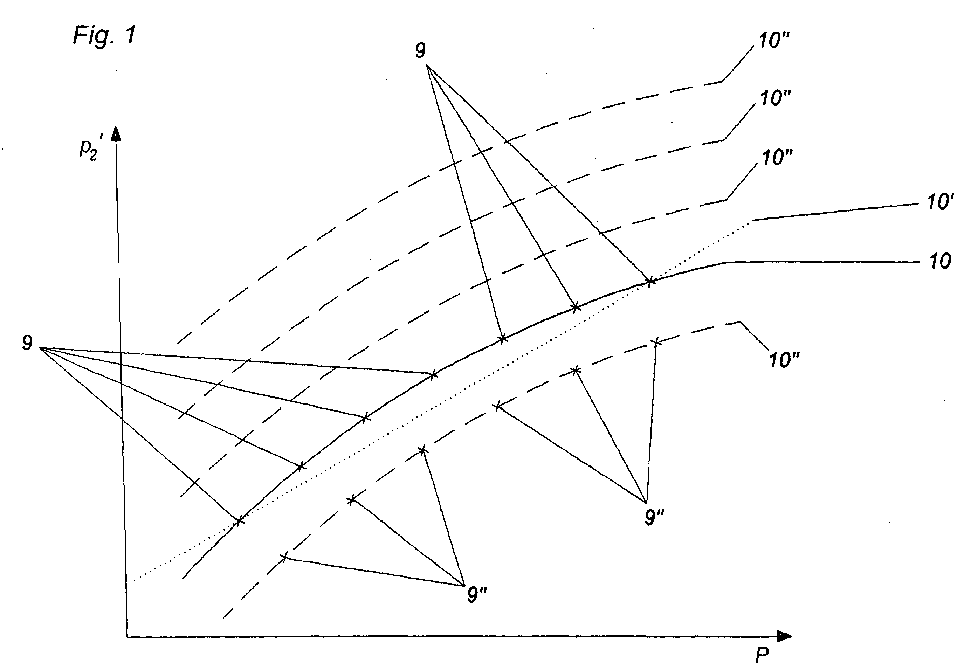

Fig. 1 zeigt schematisch die beim Stand der Technik bekannte Abhängigkeit des Gemischdrucksollwertes $p_2'$ von der von der Brennkraftmaschine abgegebenen Leistung P beim Betrieb mit einer Brennstoffart. Entsprechende Abhängigkeiten zwischen dem λ-Sollwert und der abgegebenen Leistung P existieren in analoger Weise und sind daher genauso darstellbar. Der gebotenen Kürze wegen, wird jedoch im weiteren das Verfahren im Wesentlichen anhand des Zusammenhangs zwischen $p_2$ und P erläutert.

Auf der durchgezogen dargestellten Kennlinie 10 liegen all diejenigen Betriebspunkte der Brennkraftmaschine, welche jeweils einen bestimmten Stickoxidemissionswert aufweisen. Erzeugt wird die Kennlinie bzw. das Kennlinienfeld durch Einmessen, zum Beispiel bei der Inbetriebnahme der Brennkraftmaschine. Dies geschieht, indem an einem Betriebspunkt 9 bei gegebener Leistung P ein Gemischdruck so eingestellt wird, dass sich der gewünschte Stickoxidemissionswert der Brennkraftmaschine ergibt. Dieser Gemischdruck ist dann der Gemischdrucksollwert $p_2'$ bei der gegebenen Leistung P. Um eine Kennlinie 10 zu erzeugen, wird anschließend zumindest ein zweiter Betriebspunkt 9 durch entsprechendes Einstellen eines anderen Leistungswertes P angefahren, wobei wiederum der Gemischdrucksollwert $p_2'$ bestimmt wird, bei dem der gewünschte Stickoxidemissionswert erreicht ist. Aus den beiden so bestimmten Betriebspunkten 9 ergibt sich in erster Näherung eine Kennlinie 10' (gepunktet dargestellt). Diese kann linear verlaufen oder mit Hilfe bekannter Polynome oder dergleichen als gekrümmte Kurve durch die Betriebspunkte 9 verlaufen. Werden mehr als zwei Betriebspunkte 9 mit der genannten Vorgehensweise bei konstantem Stickoxidemissionswert eingemessen, so kann sich hieraus auch ein linearer oder gekrümmter Verlauf (Kennlinie 10) ergeben.

Bei Brennkraftmaschinen, bei denen sich gewisse Betriebsparameter, wie zum Beispiel die Temperatur $t_2'$ des Brennstoff-Luft-Gemisches oder der Zündzeitpunkt ZZP oder die Qualität des zugeführten Brennstoffes stark ändern können, kann es darüber hinaus sinnvoll sein, den Einfluss auch dieser Parameter zu berücksichtigen. Hieraus ergibt sich dann in der Regel ein Kennlinienfeld. Fig. 1 zeigt beispielhaft verschiedene Kennlinien 10" gestrichelt dargestellt, die sich bei entsprechendem Einmessen von Betriebspunkten 9" bei jeweils konstanten Stickoxidemissionswerten und jeweils verschiedenen Temperaturwerten $t_2'$ ergeben. Bei der Berücksichtigung mehrerer Einflussparameter ergibt sich dann insgesamt ein mehrdimensionales Kennlinienfeld. Alternativ können, basierend auf einer einzelnen Kennlinie 10, aber auch entsprechende Korrekturwerte für die Temperatur des Brennstoff-Luft-Gemisches $t_2$' oder den Zündzeitpunkt ZZP oder die Qualität des zugeführten Brennstoffes weitere Einflussparameter berücksichtigt werden. Um den Aufwand beim Einmessen des Kennlinienfeldes nach der oben geschilderten Vorgehensweise in Grenzen zu halten, können auch Schätzungen angewendet werden, wenn der Einfluss eines bestimmten Parameters bekannt ist.

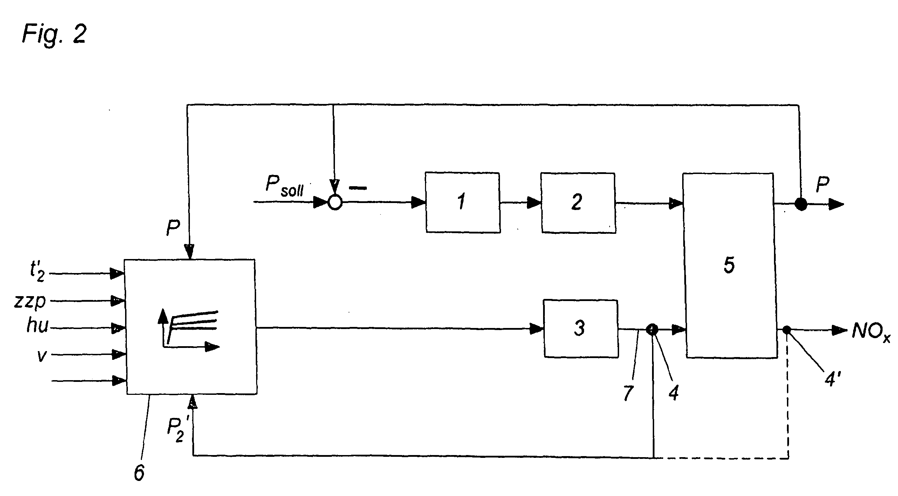

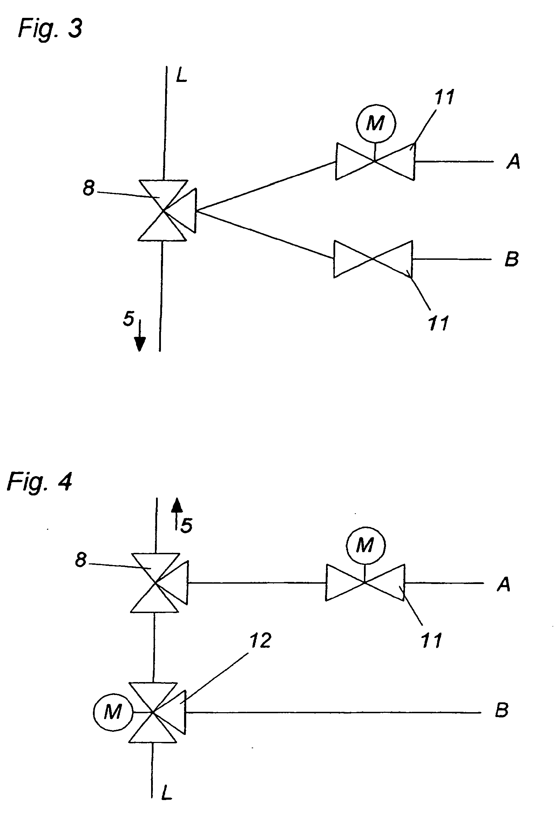

Fig. 2 zeigt nun ein auf das Wesentliche reduziertes Motorschema, mit dem das erfindungsgemäße Verfahren durchgeführt werden kann. Dieses weist zunächst, wie an sich bekannt, einen Leistungsregler auf, bei dem ein PID-Regler 1 ein Leistungsstellglied 2 (zum Beispiel eine Drosselklappe oder ein Umblasventil) in der Weise verstellt, dass die vom Motor 5 abgegebene Leistung P dem gewünschten Leistungssollwert $P_{soll}$ entspricht. Erfindungsgemäß ist nun eine Regelstrecke für den Motor 5 vorgesehen, bei der zum Erreichen konstanter Stickoxydemissionswerte $NO_x$ eine Brennstoffmischeinrichtung 3 für mindestens zwei Brennstoffe - wie weiter unten erläutert - einerseits gesteuert und andererseits geregelt wird. Erfindungsgemäße Ausführungsvarianten für die Brennstoffmischeinrichtung 3 sind in den Fig. 3 und 4 dargestellt. Auch diese werden weiter unten erläutert. In Fig. 2 selbst ist im hinter der Brennstoffmischeinrichtung 3 angeordneten Einlasstrakt 7 des Motors 5 in einer ersten Variante eine Druckmesseinrichtung 4 angeordnet. Diese liefert der Regeleinrichtung 6 einen aktuellen Messwert zum Gemischdruck vor den Ventilen. Gestrichelt dargestellt ist die Variante, bei der anstatt des Gemischdrucks ein λ-Wert zur Regelung herangezogen wird. Dieser kann dann im Abgastrakt mittels einer handelsüblichen λ-Sonde 4' gemessen werden. Auch in dieser Variante wird der Messwert dem Regler 6 zugeführt. Neben der gemessenen Leistung P und dem gemessenen Gemischdruck bzw. λ-Wert können der erfindungsgemäßen Regeleinrichtung 6 auch noch weitere Motorparameter wie zum Beispiel die Temperatur $t_2$' des Brennstoffluftgemisches oder der Zündzeitpunkt ZZP oder der untere Heizwert hu oder der Volumenstrom V zugeführt werden, um dann auf anhand von Fig. 1 kurz dargestellte mehrdimensionale Kennlinienfelder bzw. Zusammenhänge zurückgreifen zu können. Die Regeleinrichtung 6 steuert entsprechend des weiter unten im Detail noch einmal geschilderten erfindungsgemäßen Regelverfahrens die Brennstoffmischeinrichtung 3 an.

Fig. 3 zeigt ein erstes erfindungsgemäßes Ausführungsbeispiel für die Brennstoffmischeinrichtung 3. In diesem werden zwei verschiedene Brennstoffarten A und B (vorzugsweise zwei verschiedene brennbare Gase) über einstellbare Volumenstromdosierventile 11 einem Mischer 8 zugeführt. In diesem Mischer werden die beiden Brennstoffarten A und B dann mit Luft L zu einem brennbaren Gasgemisch vermengt, welches dann dem Motor 5 zugeführt wird. Obwohl die gezeigte Mischeinrichtung 3 natürlich auch dazu verwendet werden kann den Motor 5 nur mit Brennstoff A oder nur mit Brennstoff B zu versorgen, bezieht sich das erfindungsgemäße Verfahren darauf, den Motor zumindest zeitweise mit beiden Brennstoffen zu betreiben oder den Motor vom Betrieb mit einem Brennstoff auf den Betrieb mit dem anderen Brennstoff umzustellen, wobei währenddessen immer vorgebbare Stickstoffemissionswerte erreicht werden. Erfindungsgemäß ist nun vorgesehen, dass das Volumenstromdosierventil der ersten Brennstoffart A in Abhängigkeit von einer Steuersollwertvorgabe gesteuert oder konstant gehalten wird, während das Volumenstromdosierventil 11 und damit der Volumenstrom der zweiten Brennstoffart B in Abhängigkeit eines Motorparameters geregelt wird, oder umgekehrt.

Fig. 4 zeigt eine weitere Variante einer Brennstoffmischeinrichtung 3, welche für ein erfindungsgemäßes Regelverfahren ebenfalls verwendet werden kann. Hier wird der Brennstoff B direkt einem verstellbaren Mischer 12 zugeführt. Dieser mischt Brennstoff B mit Luft L. Dieses Gemisch wird dann einem zweiten Mischer 8 zugeführt, in dem noch die zweite Brennstoffart A zugemischt wird. Die pro Zeiteinheit zugeführt Menge von A lässt sich wiederum über das Volumenstromdosierventil 11 einstellen. Auch hier kann erfindungsgemäß der Volumenstrom der einen Brennstoffart gesteuert werden, während der Volumenstrom der anderen Brennstoffart geregelt wird, um die vorgebbaren Stickoxydemissionswerte zu erreichen.

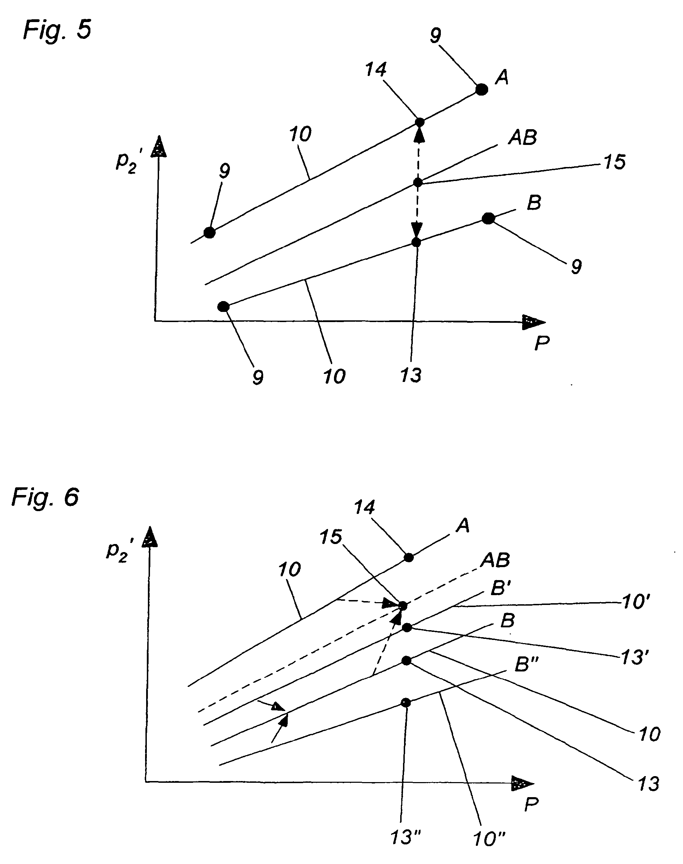

Wie nun der jeweilige Gemischdrucksollwert $p_2$' für verschiedene Leistungswerte P beim Betrieb mit zwei verschiedenen Brennstoffarten erfindungsgemäß bestimmt werden kann, wird anhand von Fig. 5 erläutert. Zunächst müssen für beide Brennstoffarten getrennt voneinander Kennlinien 10, wie anhand von Fig. 1 erläutert, bestimmt werden. Beim Einmessen wird die Brennkraftmaschine, wie beim Stand der Technik bekannt, nur mit jeweils einem Brennstoff, welcher auch ein Gemisch sein bzw. nicht brennbare Beimischungen aufweisen kann, betrieben.

In Fig. 5 wird die Bestimmung des Gemischdrucksollwerts 15 der Übersichtlichkeit halber anhand von nur einer Kennlinie 10 für den Brennstoff A und nur einer anderen Kennlinie 10 für den Brennstoff B gezeigt. Darüber hinaus sind für beide Kennlinien 10 jeweils nur zwei Betriebspunkte 9 eingemessen worden. Alle Betriebspunkte 13 und 14 zwischen den eingemessenen Betriebspunkten 9 können über Gleichungen aus diesen berechnet werden oder eben als Kennlinienfeld in einem entsprechenden Speicher der Regeleinrichtung 6 abgelegt sein. Anstatt einer linearen Interpolation können auch gekrümmte Kurven als Kennlinien 10 Grundlage für die Berechnung des Gemischdrucksollwertes $p_2$' 15 sein. Diese Berechnung selbst kann als Interpolation ausgeführt werden. Grundsätzlich handelt es sich immer um einen momentanen Gemischdrucksollwert $p_2$ 15 der entweder auf Grundlage der aktuellen Vorgabewerte jeweils berechnet oder als Kennlinienfeld abgelegt sein kann.

Eine günstige Variante sieht hierbei vor, dass die Berechnung auf der Grundlage der entsprechenden Sollwerte 13 und 14 und einem Normierungsfaktor x basiert. Dieser kann zum Beispiel in Abhängigkeit des Heizwertes oder des $CH_4$-Gehaltes des ersten Brennstoffes A oder des zweiten Brennstoffes B oder eines Volumenstroms eines Brennstoffgemisches bestimmt werden. x kann sowohl in einem linearen als auch in einem nicht linearen Zusammenhang mit den genannten Parametern stehen. Unter Berücksichtigung, dass der Normierungsfaktor x auf Werte zwischen 0 und 1 normiert ist, ergibt sich folgende Berechnungsvorschrift für den Gemischdrucksollwert p2' in Punkt 15 (=p$_2$' (15)):

$$p_2' (15) = p_2' (13) + (p_2'(14) - p_2' (13)) \cdot x$$

Hierbei sind p$_2$' (13) und p$_2$' (14) die jeweiligen Gemischdrucksollwerte wie sie anhand der Kennlinien 10 für die Brennstoffart A und die Brennstoffart B vorgegeben sind. Gemäß dem so berechneten Gemischdrucksollwert p$_2$' (15) wird dann das entsprechende Volumenstromdosierventil 11 bzw. der entsprechende volumenstromsteuerbare Gasmischer 12 des zu regelnden Brennstoffes A oder B angesteuert, währenddessen das andere Volumenstromdosierventil 11 oder der andere volumenstromsteuerbare Gasmischer 12 für den anderen Brennstoff gemäß fixen Vorgabewerten konstant gehalten oder gesteuert wird. Die anhand von p$_2$' und P erläuterte Berechnung des Sollwertes 15 funktioniert in analoger Weise bei einer Reglung, die auf dem λ-Wert und der Leistung P basiert.

Fig. 6 zeigt eine Variante der Erfindung, bei der bei der Berechnung des Gemischdrucksollwertes p$_2$' (15) oder des λ-Sollwertes Schwankungen in der Qualität des zweiten Brennstoffes B, vorzugsweise über vorab bestimmte Kennlinienfelder oder Korrekturfaktoren entsprechende Messwerte, berücksichtigt werden müssen. So kommt es zum Beispiel bei der Verwendung von Deponiegasen als Brennstoff häufig zu Qualitätsschwankungen des Brennstoffes. Im gezeigten Beispiel in Fig. 6 ist dies für den Brennstoff B der Fall. Durch entsprechende Qualitätsschwankungen liegen die Gemischdrucksollwerte für diese Brennstoffart dann nicht mehr auf einer Kennlinie, sondern im Bereich zwischen zwei Kennlinien 10' und 10". Der jeweils aktuelle Sollwert 13 für die Gasart B muss dann zunächst anhand von, wie üblich eingemessenen Kennlinien 10' und 10" aus den Werten 13' und 13" bestimmt werden. Für diese Berechnung kann eine analoge Normierungsfunktion, wie zur Bestimmung des p$_2$' (15), herangezogen werden, wobei der Normierungsfaktor x durch einen anderen Normierungsfaktor y ersetzt ist. y kann wiederum beispielsweise über den aktuellen Heizwert oder die aktuelle Zusammensetzung des Brennstoffes bestimmt werden und linear oder auch nicht linear von diesem abhängen. Ist der für die aktuelle Qualität des Brennstoffes B charakteristische Gemischdrucksollwert p$_2$' (13) berechnet, so kann der für die Regelung benötigte Gemischdrucksollwert p$_2$' (15), wie anhand von Fig. 5 gezeigt, aus den Gemischdrucksollwerten p$_2$' (13) und p$_2$' (14) mit Hilfe des Normierungsfaktors x berechnet werden.

Im gezeigten Beispiel schwankt der CH$_4$-Gehalt des Brennstoffes B zwischen 40 % und 60 %. Die Kennlinie 10' repräsentiert den Zusammenhang zwischen P und p$_2$' für Brennstoff B mit einem CH$_4$-Gehalt von 40 %, die Kennlinie 10" stellt den entsprechenden Zusammenhang bei einem CH$_4$-Gehalt des Brennstoffes B von 60 % dar. Wenn nicht nur die Qualität eines Brennstoffes B sondern auch die des anderen Brennstoffes A schwankt, müssen entsprechende Kennlinien A' und A" (hier nicht dargestellt) eingemessen werden, um entsprechend hieraus den Gemischdrucksollwert p$_2$' (14) zu berechnen.

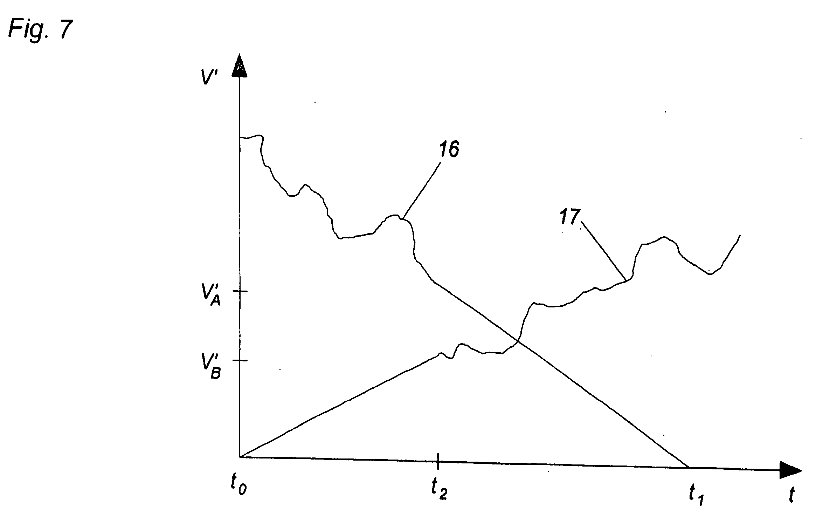

Fig. 7 zeigt die zeitlichen Verläufe des Volumenstroms 16 des Brennstoffes A und des Volumenstromes 17 des Brennstoffes B bei einer exemplarisch ausgewählten Umstellung des Betriebs der Brennkraftmaschine vom Betrieb mit dem ersten Brennstoff A auf den Betrieb mit dem zweiten Brennstoff B. Der Betriebsumschaltpunkt wird bei einem vorgegebenen Verhältnis der Volumenströme V'A zu V'B zum Zeitpunkt t$_2$ erreicht. Die Verhältnisse im Betriebsumschaltpunkt liegen günstigerweise zwischen 1:4 und 4:1 und besonders bevorzugt zwischen 1:2 und 2:1. Zu Zeiten kleiner t$_2$ wird der Volumenstrom des Brennstoffes A in Abhängigkeit des Gemischdrucksollwertes p$_2$' (15) geregelt, während der Volumenstrom des Brennstoffes B einer vorgegebenen Rampe folgend erhöht wird. Zum Zeitpunkt t$_2$ erfolgt dann das Umschalten in einen zweiten Betriebsmodus. Ab diesem Zeitpunkt wird der Volumenstrom des Brennstoffes B in Abhängigkeit des Gemischdrucksollwertes p$_2$' (15) geregelt, während der Volumenstrom des Brennstoffes A einer vorgegebenen Rampe folgend reduziert wird.

Die Erfindung ist nicht auf die gezeigten Ausführungsbeispiele beschränkt. So kann das erfindungsgemäße Verfahren auch auf den Betrieb einer Brennkraftmaschine mit mehr als zwei Brennstoffarten angewendet werden, indem dann zum Beispiel zwei Brennstoffarten nach fixen Vorgabewerten gesteuert werden, während eine dritte Brennstoffart geregelt wird. Ein wesentlicher Vorteil des erfindungsgemäßen Verfahrens liegt darin, dass auch bei Änderungen im Mischungsverhältnis von verschiedenen Brennstoffen zu jedem beliebigen Zeitpunkt das Erreichen der gewünschten NO$_x$-Emissionswerte gesichert ist. Im einfachsten Fall kann das erfindungsgemäße Verfahren schon auf der Grundlage von nur zwei Kennlinien (wie in Fig. 5 gezeigt) durchgeführt werden, die restlichen Werte können dann jeweils online berechnet werden oder in entsprechenden Kennlinienfeldern abgelegt sein. Hierdurch ist eine exakte Regelung auch bei komplizierteren Mischsystemen möglich, wobei zu jeder Zeit, das dem Motor zugeführte Brennstoffgemisch bekannt ist und entsprechend exakt in der Regelung berücksichtigt werden kann. Bei der Umsetzung einer nach dem erfindungsgemäßen Verfahren betriebenen Brennkraftmaschine kann ausschließlich auf bekannte Komponenten, wie Mischer und Volumenstromdosierventile, zurückgegriffen werden.

**Patentansprüche**

1. Verfahren zum Regeln einer Brennkraftmaschine, insbesondere mit magerer Betriebsweise, zum Erreichen vorgebbarer Stickoxydemissionswerte der Brennkraftmaschine, wobei der Brennkraftmaschine zumindest zeitweise ein erster Brennstoff (A) und zumindest zeitweise ein zweiter Brennstoff (B) zugeführt wird, wobei die pro Zeiteinheit der Brennkraftmaschine zugeführte Menge des ersten Brennstoffes (A) in Abhängigkeit von einer Steuersollwertvorgabe gesteuert oder konstant gehalten wird und die pro Zeiteinheit der Brennkraftmaschine zugeführte Menge des zweiten Brennstoffes (B) zum Erreichen des vorgebbaren Stickoxydemissionswertes in Abhängigkeit von mindestens einem erfassten Motorparameter geregelt wird, **dadurch gekennzeichnet, dass** die pro Zeiteinheit der Brennkraftmaschine zugeführte Menge des zweiten Brennstoffes (B) geregelt wird, indem ein durch sie beeinflusster Gemischdruck in einem Einlasstrakt (7) der Brennkraftmaschine an einen in Abhängigkeit von der abgegebenen Leistung (P) und des vorgegebenen Stickoxydemissionswertes ($NO_x$) der Brennkraftmaschine bestimmten Gemischdrucksollwert (P2') angepasst wird, oder dass die pro Zeiteinheit der Brennkraftmaschine zugeführte Menge des zweiten Brennstoffes (B) geregelt wird, indem ein durch sie beeinflusster λ-Wert in einem Abgastrakt der Brennkraftmaschine an einen in Abhängigkeit von der abgegebenen Leistung (P) und des vorgegebenen Stickoxydemissionswertes ($NO_x$) der Brennkraftmaschine bestimmten λ-Sollwert angepasst wird.

2. Verfahren nach Anspruch 1, **dadurch gekennzeichnet, dass** der erste Brennstoff (A) ein erstes brennbares Gas und/oder der zweite Brennstoff (B) ein zweites brennbares Gas ist.

3. Verfahren nach einem der Ansprüche 1 oder 2, **dadurch gekennzeichnet, dass** zur Änderung des Mischungsverhältnisses zwischen dem ersten und dem zweiten Brennstoff (A, B) oder zur Umstellung des Betriebs der Brennkraftmaschine vom Betrieb mit dem ersten Brennstoff (A) auf den Betrieb mit dem zweiten Brennstoff (B) in einem ersten Betriebsmodus diesseits eines vorgebbaren Betriebsumschaltpunktes die pro Zeiteinheit zugeführte Menge des ersten Brennstoffes (A) gesteuert oder konstant gehalten und die pro Zeiteinheit zugeführte Menge des zweiten Brennstoffes (B) geregelt wird und in einem zweiten Betriebsmodus jenseits des vorgebbaren Betriebsumschaltpunktes die pro Zeiteinheit zugeführte Menge des zweiten Brennstoffes (B) gesteuert oder konstant gehalten und die pro Zeiteinheit zugeführte Menge des ersten Brennstoffes (A) geregelt wird.

4. Verfahren nach Anspruch 3, **dadurch gekennzeichnet, dass** der vorgebbare Betriebsumschaltpunkt durch ein vorgebbares Verhältnis zwischen der pro Zeiteinheit zugeführten Menge des ersten Brennstoffes (A) und der pro Zeiteinheit zugeführten Menge des zweiten Brennstoffes (B) definiert ist.

5. Verfahren nach Anspruch 4, **dadurch gekennzeichnet, dass** das vorgebbare Verhältnis im Betriebsumschaltpunkt zwischen 1:4 und 4:1, vorzugsweise zwischen 1:2 und 2:1, liegt.

6. Verfahren nach einem der Ansprüche 1 bis 5, **dadurch gekennzeichnet, dass** der in Abhängigkeit der abgegebenen Leistung (P) und des vorgebbaren Stickoxydemissionswertes ($NO_x$) bestimmte Gemischdrucksollwert (15) oder λ-Sollwert zusätzlich in Abhängigkeit von für den Betrieb der Brennkraftmaschine mit dem ersten Brennstoff (A) und für den Betrieb der Brennkraftmaschine mit dem zweiten Brennstoff (B) bestimmten entsprechenden Sollwerten (13, 14) und einem weiteren Normierungsfaktor x berechnet wird.

7. Verfahren nach Anspruch 6, **dadurch gekennzeichnet, dass** der Normierungsfaktor x in Abhängigkeit des Heizwertes oder des $CH_4$-Gehaltes des ersten Brennstoffes (A) oder des zweiten Brennstoffes (B) oder eines Brennstoffgemisches bestimmt wird.

8. Verfahren nach Anspruch 6 oder 7, **dadurch gekennzeichnet, dass** bei der Berechnung des Gemischdrucksollwertes (15) oder des λ-Sollwertes Schwankungen in der Zusammensetzung des ersten Brennstoffes (A) und/oder des zweiten Brennstoffes (B), vorzugsweise über vorab bestimmte Kennlinienfelder oder Korrekturfaktoren und entsprechende Messwerte, berücksichtigt werden.

9. Regeleinrichtung (6) zur Durchführung des Verfahrens nach einem der Ansprüche 1 bis 8.

10. Brennkraftmaschine mit einer Regeleinrichtung (6) nach Anspruch 9.

11. Brennkraftmaschine nach Anspruch 10 mit einem ersten Volumenstromdosierventil (11) für den ersten Brennstoff (A) und einem zweiten Volumenstromdosierventil (11) für den zweiten Brennstoff (B).

**12.** Brennkraftmaschine nach Anspruch 10 mit einem Volumenstromdosierventil (11) für den ersten Brennstoff (A) und einem volumenstromsteuerbaren Gasmischer (12) dem der zweite Brennstoff (B) zuführbar ist.

**Claims**

**1.** Method of regulating an internal combustion engine, in particular with a lean operating mode, in order to reach presettable nitrogen oxide emission values of the internal combustion engine, wherein the internal combustion engine is supplied at least some of the time with a first fuel (A) and at least some of the time with a second fuel (B), the quantity of the first fuel (A) supplied to the internal combustion engine per unit of time being controlled according to a control target value preset or kept constant and the quantity of the second fuel (B) supplied to the internal combustion engine per unit of time being regulated according to at least one recorded engine parameter in order to reach the presettable nitrogen oxide emission value, **characterised in that** the quantity of the second fuel (B) supplied to the internal combustion engine per unit of time is regulated by matching a mixture pressure influenced by the quantity of the second fuel (B) in an intake (7) of the internal combustion engine to a mixture pressure target value (P2') determined according to the output (P) delivered and the preset nitrogen oxide emission value ($NO_x$) of the internal combustion engine or that the quantity of the second fuel (B) supplied to the internal combustion engine per unit of time is regulated by matching a $\lambda$-value influenced by the quantity of the second fuel (B) in an exhaust of the internal combustion engine to a $\lambda$-target value determined according to the output (P) delivered and the preset nitrogen oxide emission value ($NO_x$) of the internal combustion engine.

**2.** Method according to claim 1, **characterised in that** the first fuel (A) is a first combustible gas and/or the second fuel (B) is a second combustible gas.

**3.** Method according to one of claims 1 or 2, **characterised in that** to change the mixing ratio between the first and second fuel (A, B) or to switch the operation of the internal combustion engine from operation with the first fuel (A) to operation with the second fuel (B), in a first operating mode on this side of a presettable the quantity of the first fuel (A) supplied per unit of time is controlled or kept constant and the quantity of the second fuel (B) supplied per unit of time is regulated, and in a second operating mode on the other side of the presettable operation-switching point the quantity of the second fuel (B) supplied per unit of time is controlled or kept constant and the quantity of the first fuel (A) supplied per unit of time is regulated.

**4.** Method according to claim 3, **characterised in that** the presettable operation-switching point is defined by a presettable ratio between the quantity of the first fuel (A) supplied per unit of time and the quantity of the second fuel (B) supplied per unit of time.

**5.** Method according to claim 4, **characterised in that** the presettable ratio in the operation-switching point lies between 1:4 and 4:1, preferably between 1:2 and 2:1.

**6.** Method according to one of claims 1 to 5, **characterised in that** the mixture pressure target value (15) or the $\lambda$-target value determined according to the output (P) delivered and the presettable nitrogen oxide emission value ($NO_x$) is additionally calculated according to the corresponding target values (13, 14) intended for the operation of the internal combustion engine with the first fuel (A) and for the operation of the internal combustion engine with the second fuel (B) and a further standardization factor x.

**7.** Method according to claim 7, **characterised in that** the standardization factor x is determined according to the calorific value or the $CH_4$ content of the first fuel (A) or of the second fuel (B) or of a fuel mixture.

**8.** Method according to claim 7 or 8, **characterised in that** when calculating the mixture pressure target value (15) or the $\lambda$-target value fluctuations in the composition of the first fuel (A) and/or of the second fuel (B) are taken into account, preferably via previously determined characteristics fields or correction values and corresponding measured values.

**9.** Regulator (6) for carrying out the method according to one of claims 1 to 8.

**10.** Internal combustion engine with a regulator (6) according to claim 9.

**11.** Internal combustion engine according to claim 10 with a first volume flow dosage valve (11) for the first fuel (A) and a second volume flow dosage valve (11) for the second fuel (B).

**12.** Internal combustion engine according to claim 10 with a first volume flow dosage valve (11) for the first fuel (A) and volume flow-controllable gas mixer (12) to which the second fuel (B) can be supplied.

## Revendications

**1.** Procédé pour la régulation d'un moteur à combustion interne, en particulier avec un mode de fonctionnement pauvre, afin d'atteindre des valeurs pouvant être spécifiées d'émission d'oxyde d'azote du moteur à combustion interne, de sorte que le moteur à combustion interne peut être au moins ponctuellement alimenté avec un premier carburant (A) et au moins ponctuellement avec un deuxième carburant (B), dans lequel la quantité de premier carburant (A) amenée au moteur à combustion interne par unité de temps est commandée ou est maintenue constante en fonction d'une spécification de valeur de consigne de régulation, et dans lequel la quantité de deuxième carburant (B) amenée au moteur à combustion interne par unité de temps, afin d'atteindre la valeur d'émission en oxyde d'azote susceptible d'être spécifiée, est régulée en fonction d'au moins un paramètre du moteur saisi, **caractérisé en ce que** la quantité de deuxième carburant (B) amenée au moteur à combustion interne par unité de temps est régulée, dans la mesure où une pression de mélange influencée par elle dans un conduit d'entrée (7) du moteur à combustion interne est adaptée à une valeur de consigne de pression de mélange (P2) déterminée en fonction de la puissance fournie (P) et de la valeur d'émission d'oxyde d'azote ($NO_x$) spécifiée du moteur à combustion interne, ou **en ce que** la quantité de deuxième carburant (B) amenée au moteur à combustion interne par unité de temps est régulée, dans la mesure où une valeur $\lambda$ influencée par elle dans un conduit d'échappement du moteur à combustion interne est adaptée à une valeur de consigne $\lambda$ déterminée en fonction de la puissance fournie (P) et de la valeur d'émission d'oxyde d'azote ($NO_x$) spécifiée du moteur à combustion interne.

**2.** Procédé selon la revendication 1, **caractérisé en ce que** le premier carburant (A) est un premier gaz combustible et/ou **en ce que** le deuxième carburant (B) est un deuxième gaz combustible.

**3.** Procédé selon une des revendications 1 ou 2, **caractérisé en ce que** pour la modification du rapport de mélange entre le premier et le deuxième carburant (A, B), ou bien pour la commutation du fonctionnement du moteur à combustion interne afin de passer du fonctionnement avec le premier carburant (A) au fonctionnement avec le deuxième carburant (B), dans un premier mode de fonctionnement, en deçà d'un point de commutation du fonctionnement pouvant être spécifié, la quantité de premier carburant (A) amenée par unité de temps est commandée ou est maintenue constante et la quantité de deuxième carburant (B) amenée par unité de temps est régulée, et **en ce que** dans un deuxième mode de fonctionnement au--delà du point de commutation du fonctionnement, la quantité de deuxième carburant (B) amenée par unité de temps est commandée ou est maintenue constante, et la quantité de premier carburant (A) amenée par unité de temps est régulée.

**4.** Procédé selon la revendication 3, **caractérisé en ce que** le point d'inversion du fonctionnement pouvant être spécifié est défini par un rapport pouvant être spécifié entre la quantité de premier carburant (A) amenée par unité de temps et la quantité de deuxième carburant (B) amenée par unité de temps.

**5.** Procédé selon la revendication 4, **caractérisé en ce que** le rapport pouvant être spécifié au point d'inversion du fonctionnement est compris entre 1:4 et 4:1, et de préférence entre 1:2 et 2:1.

**6.** Procédé selon l'une quelconque des revendications 1 à 5, **caractérisé en ce que** la valeur de consigne de pression de mélange (15) ou la valeur de consigne $\lambda$ définie en fonction de la puissance fournie (P) et de la valeur d'émission d'oxyde d'azote ($NO_x$) pouvant être spécifiée, est calculée de manière additionnelle en fonction de valeurs de consigne (13, 14) correspondantes définies pour le fonctionnement du moteur à combustion interne avec le premier carburant (A) et pour le fonctionnement du moteur à combustion interne avec le deuxième carburant (B) et d'un autre facteur de réduction x.

**7.** Procédé selon la revendication 6, **caractérisé en ce que** le facteur de réduction x est déterminé en fonction de la valeur calorifique ou bien de la teneur en $CH_4$ du premier carburant (A) ou du deuxième carburant (B) ou bien d'un mélange de carburants.

**8.** Procédé selon les revendications 6 ou 7, **caractérisé en ce que** lors du calcul de la valeur de consigne de pression de mélange (15) ou de la valeur de consigne $\lambda$, on tient compte des fluctuations de la composition du premier carburant (A) et/ou du deuxième carburant (B), de préférence grâce à des familles de caractéristiques définies à l'avance ou des facteurs de corrections et des valeurs mesurées correspondantes.

9. Dispositif de régulation (6) pour la mise en oeuvre du procédé selon l'une quelconque des revendications 1 à 8.

10. Moteur à combustion interne avec un dispositif de régulation (6) selon la revendication 9.

11. Moteur à combustion interne selon la revendication 10 avec une première soupape de réglage du débit volumétrique (11) pour le premier carburant (A) et une deuxième soupape de réglage du débit volumétrique (11) pour le deuxième carburant (B).

12. Moteur à combustion interne selon la revendication 10 avec une soupape de réglage du débit volumétrique (11) pour le premier carburant (A) et un mélangeur de gaz (12) à débit volumétrique réglable pouvant être alimenté par le deuxième combustible (B).

Fig. 1

9

10"
10"
10"
10'
10

9

9"

9"

10"

p₂'

P

EP 1 645 741 B1

Fig. 2

EP 1 645 741 B1

**Fig. 3**

**Fig. 4**

*Fig. 5*

*Fig. 6*

Fig. 7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0259382 B1
- EP 1225330 A2